# EUROPEAN PATENT SPECIFICATION

(11) **EP 2 331 787 B1**
(45) Date of publication and mention of the grant of the patent: **26.10.2016**
(21) Application number: 08821963.9
(22) Date of filing: 11.09.2008
(51) Int. Cl.: E21B 43/00, C09K 8/36, C09K 8/00, E21B 21/00

(54) **NITROGEN-FREE INVERT EMULSION WELLBORE FLUID**
STICKSTOFFFREIE INVERTEMULSIONSBOHRLOCHFLÜSSIGKEIT
FLUIDE DE PUITS DE TYPE ÉMULSION INVERSE SANS AZOTE

(43) Date of publication of application: 15.06.2011
(73) Proprietor: M-I L.L.C., Houston, TX 77072 (US)
(72) Inventor: PATEL, Arvind, D., Sugar Land TX 77478 (US); IRVING, Maribella, Houston Texas 77095 (US)
(74) Representative: Bailey, Sam Rogerson
(86) International application number: PCT/US2008/075938
(87) International publication number: WO 2010/030275

(56) References cited:
- EP-A2- 0 111 959
- GB-A- 2 309 240
- US-A1- 2005 049 147
- US-A1- 2005 124 499
- US-A1- 2007 219 098
- US-B2- 6 589 917

## Description

### FIELD OF INVENTION

The invention relates generally to wellbore fluids, and more specifically to low toxicity invert emulsion wellbore fluids.

### BACKGROUND OF INVENTION

When drilling or completing wells in earth formations, various fluids typically are used in the well for a variety of reasons. Common uses for well fluids include: lubrication and cooling of drill bit cutting surfaces while drilling generally or drilling-in (i.e., drilling in a targeted petroliferous formation), transportation of "cuttings" (pieces of formation dislodged by the cutting action of the teeth on a drill bit) to the surface, controlling formation fluid pressure to prevent blowouts, maintaining well stability, suspending solids in the well, minimizing fluid loss into and stabilizing the formation through which the well is being drilled, fracturing the formation in the vicinity of the well, displacing the fluid within the well with another fluid, cleaning the well, testing the well, fluid used for emplacing a packer, abandoning the well or preparing the well for abandonment, and otherwise treating the well or the formation.

Drilling fluids or muds typically include a base fluid (water, diesel or mineral oil, or a synthetic compound), weighting agents (most frequently barium sulfate or barite is used), emulsifiers and emulsifier systems, fluid loss additives, viscosity regulators and the like, for stabilizing the system as a whole and for establishing the desired performance properties.

Oil-based drilling fluids are generally used in the form of invert emulsion muds. Invert emulsion fluids are employed in drilling processes for the development of oil or gas sources, as well as, in geothermal drilling, water drilling, geoscientific drilling, and mine drilling. Specifically, the invert emulsion fluids are conventionally utilized for such purposes as providing stability to the drilled hole, forming a thin filter cake, and lubricating the drilling bore and the downhole area and assembly.

An invert emulsion wellbore fluid consists of three phases: an oleaginous phase, an aqueous phase, and a finely divided particle phase. The discontinuous aqueous phase is dispersed in an external or continuous oleaginous phase with the aid of one or more emulsifiers. The oleaginous phase may be a mineral or synthetic oil, diesel or crude oil, while the aqueous phase is usually water, sea water, or brines such as calcium chloride or sodium chloride.

An invert emulsion is achieved through the use of emulsifiers, which reduce the surface tension between the discontinuous aqueous phase and the continuous oleaginous phase. Emulsifiers stabilize the mixture by being partially soluble in the both the aqueous and oleaginous phases. Generally, emulsifiers used in oil-based muds contain nitrogen, which may release ammonia vapor at elevated temperatures. Ammonia vapor can be toxic and noxious, and large quantities of ammonia vapor may render the work environment undesirable for an operator. Accordingly, there exists a need for providing invert emulsion fluids that are stable at high temperatures and do not release ammonia vapors.

US 2007/0219098 describes emulsifiers for invert drilling fluids including mixtures of alkyl oligoglycosides and alkenyl oligoglycosides. GB 2 309 240 describes invert emulsion wellbore fluids in which the emulsifier is a combination of a non-ionic alkoxylated surfactant (which may be an alcohol ethoxylate) and an anionic surfactant.

### SUMMARY OF INVENTION

In one aspect, the present invention relates to a method of performing a downhole operation. The method comprises circulating an invert emulsion wellbore fluid into a wellbore, wherein the invert emulsion wellbore fluid comprises an oleaginous continuous phase, an aqueous discontinuous phase, and a nitrogen-free emulsifying agent as defined in the claims. The emulsifying agent is a blend of an aliphatic alcohol and a glycoside, as defined in claim 1. The aliphatic alcohol may comprise the following general formula: 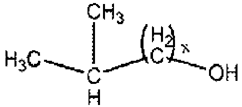 where x is an integer between 1 and 20. The aliphatic alcohol may also be an isostearyl alcohol. The glycoside may be an isostearyl glycoside, and the wellbore fluid may further comprise an alkalinity agent.

In another aspect, the present invention relates to an invert emulsion wellbore fluid comprising an oleaginous continuous phase, an aqueous discontinuous phase, and a nitrogen-free emulsifying agent consisting of and a blend of isostearyl alcohol and isostearyl glycoside as defined in claim 7.

Other aspects and advantages of the claimed subject matter will be apparent from the following description and the appended claims.

### Detailed Description

In one aspect, embodiments disclosed herein relate to emulsifying agents used in forming water-in-oil emulsions. In particular, embodiments disclosed herein relate to the use of nitrogen-free emulsifying agents for forming water-in-oil emulsions.

The term "water-in-oil emulsion refers to emulsions where the continuous phase is an oleaginous fluid and the discontinuous phase is an aqueous fluid, wherein the discontinuous phase is dispersed within the continuous phase. "Water-in-oil emulsion" and "invert emulsion" will be used throughout, and should be interpreted to meant the same.

When combining the two immiscible fluids (aqueous and oleaginous) without the use of a stabilizing emulsifier, while it is possible to initially disperse or emulsify one fluid within the other, after a period of time, the discontinuous, dispersed fluid droplets coalesce or flocculate, for example, due to the instability of the formed emulsion. Thus, to stabilize the emulsion, an emulsifier may be used. Whether an emulsion turns into a water-in-oil emulsion or an oil-in-water emulsion depends on the volume fraction of both phases and on the type of emulsifier.

Water-in-oil emulsions are typically stabilized by steric stabilization (van der Waals repulsive forces). Formation of the water-in-oil emulsion may be on the surface, or may occur *in situ* upon injection of the emulsifying fluid downhole. If the emulsifying fluid is used to form an water-in-oil emulsion on the surface, conventional methods can be used to prepare the direct emulsion fluids in a manner analogous to those normally used to prepare emulsified drilling fluids. In particular, various agents may be added to either an oleaginous fluid or aqueous fluid, with the emulsifying fluids being included in either of the two fluids, but preferably the oleaginous phase, and then vigorously agitating, mixing, or shearing the oleaginous fluid and the aqueous fluid to form a stable water-in-oil emulsion. If the water-in-oil emulsion is formed on the surface, one skilled in the art would appreciate that the invert emulsion wellbore fluid may be pumped downhole for use in various operations, including for example, drilling, completion, displacement and/or wash fluid. Alternatively, it is also within the scope of the present disclosure that the emulsifying fluid may be pumped downhole for formation of an invert emulsion downhole. In yet other embodiments, the emulsifying fluid may be used to emulsify fluids returned to the surface.

Generally, the Bancroft rule applies to the behavior of emulsions: emulsifiers and emulsifying particles tend to promote dispersion of the phase in which they do not dissolve very well; for example, a compound that dissolves better in oil than in water tends to form water-in-oil emulsions (that is they promote the dispersion of water droplets throughout a continuous phase of oil). Emulsifiers are typically amphiphilic. That is, they possess both a hydrophilic portion and a hydrophobic portion. The chemistry and strength of the hydrophilic polar group compared with those of the lipophilic nonpolar group determine whether the emulsion forms as an oil-in-water or water-in-oil emulsion.

The emulsifying fluid that may provide the hydrophilic-lipophilic balance between the oleaginous and aqueous phases is a combination of an aliphatic alcohol and a glycoside. One skilled in the art would appreciate that a number of emulsifying agents may be used to generate an invert emulsion, including nonionic, cationic or anionic emulsifying agents, as long as a hydrophilic/lipophilic balance sufficient to obtain a stable emulsion of water into oil. In one aspect, to form an invert emulsion, the emulsifying agent has a HLB value of about 4 to about 9. In another aspect, the emulsifying agent has a HLB value of about 6 to about 9.

While a number of emulsifiers may be used to result in desired HLB values for forming a stable invert emulsion wellbore fluid, one of skill in the art may appreciate that the emulsifier may result in a release of ammonia vapors when the wellbore fluid is exposed to high temperature conditions. The term "high temperature as used herein refers to temperatures exceeding 149°C (300°F). Importantly, when the emulsifying fluid of the present invention is added to a wellbore fluid and exposed to high temperature conditions, no ammonia vapors will be detected.

The emulsifying fluid consists of a nitrogen-free compound or combination of compounds. The emulsifying fluid consists of a blend of an aliphatic alcohol and a glycoside. The term "aliphatic alcohol" as used herein refers to straight-chained or branched alcohols. Aliphatic alcohols may be fatty alcohols derived from natural fats and oils, including straight-chain alcohols, branched-chain alcohols, and phenolic alcohols. The aliphatic alcohols may be represented by the following general formula: 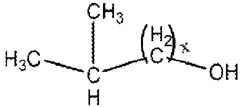 where x is an integer between 1 and 20. In a particular embodiment, the aliphatic alcohol is an isostearyl alcohol, having the formula (CH₃)₂CH-(CH₂)₁₅OH. The emulsifying fluid blend also includes a glycoside. The term "glycoside" as used herein refers to carbohydrate acetals. Glycosides can he classified by the glycone, glycosidic bond, or by aglycone. Glycosides may be represented by the following general formula:

R-G

where R is an alkyl radical containing 1-20 Carbon atoms, and G is a carbohydrate acetal. One of skill of art will appreciate that the type of glycoside used may vary depending upon the particular application and the aliphatic alcohol involved. Importantly, the glycoside selected should provide a stable invert emulsion when combined with the aliphatic alcohol. In a particular embodiment, the glycoside may be an isostearyl glycoside.

The ratio between the aliphatic alcohol and the glycoside should be sufficient to form a stable invert emulsion. The ratio of aliphatic alcohol to glycoside is selected from 0.1 to 10; 1 to 1; and 10 to 0.1.

The invert emulsion wellbore fluid may further comprise an alkalinity agent. The term "alkalinity agent" as used herein refers to basic compounds that are capable of resisting a decrease in pH upon the addition of acid. Alkalinity agents of the present invention include magnesium oxide and calcium hydroxide.

The oleaginous fluid that may form the continuous phase of the stabilized water-in-oil emulsion may be a liquid, more preferably a natural or synthetic oil, and more preferably the oleaginous fluid is selected from the group including diesel oil; mineral oil; a synthetic oil, such as hydrogenated and unhydrogenated olefins including polyalpha olefins, linear and branch olefins and the like, polydiorganosiloxanes, siloxanes, or organosiloxanes, esters of fatty acids, specifically straight chain, branched and cyclical alkyl ethers of fatty acids; similar compounds known to one of skill in the art; and mixtures thereof. The concentration of the oleaginous fluid should be sufficient that an invert emulsion forms and may be more than about 40% by volume of the emulsion in one embodiment and more than 60% by volume in yet another embodiment.

Aqueous fluids that may form the discontinuous phase of the stabilized water-in-oil emulsion may include at least one of water, sea water, brine, mixtures of water and water-soluble organic compounds and mixtures thereof. In various embodiments of the drilling fluid disclosed herein, the brine may include seawater, aqueous solutions wherein the salt concentration is less than that of sea water, or aqueous solutions wherein the salt concentration is greater than that of sea water. Salts that may be found in seawater include, but are not limited to, sodium, calcium, sulfur, aluminum, magnesium, potassium, strontium, silicon, lithium, and phosphorus salts of chlorides, bromides, carbonates, iodides, chlorates, bromates, formates, nitrates, oxides, and fluorides. Salts that may be incorporated in a brine include any one or more of those present in natural seawater or any other organic or inorganic dissolved salts. Additionally, brines that may be used in the drilling fluids disclosed herein may be natural or synthetic, with synthetic brines tending to be much simpler in constitution.

Various supplemental surfactants and wetting agents conventionally used in invert emulsion fluids may optionally be incorporated in the fluids of this invention. Such surfactants are, for example, fatty acids, soaps of fatty acids, oleate esters, oxidized crude tall oil, organic phosphate esters, alkyl aromatic sulfates and sulfonates, as well as, mixtures of the above. Generally, such surfactants are employed in an amount which does not interfere with the fluids of this invention being used as drilling fluids.

Viscosifying agents, for example, organophillic clays, may optionally be employed in the invert drilling fluid compositions of the present invention. Usually, other viscosifying agents, such as oil soluble polymers, resins, polycarboxylic acids and fatty acid soaps may also be employed. The amount of viscosifying agent used in the composition will necessarily vary depending upon the end use of the composition. Usually such viscosifying agents are employed in an amount which is at least about 0.1, preferably at least about 2, more preferably at least about 5 percent by weight to volume of the total fluid. VG-69.TM. and VG-PLUS.TM. are organoclay materials and Versa HRP.TM. is a polyamide resin material manufactured and distributed by M.I L.L.C. which are suitable viscosifying agents.

The invert emulsion drilling fluids of this invention may optionally contain a weight material. The quantity and nature of the weight material depends upon the desired density and viscosity of the final composition. The preferred weight materials include, but are not limited to, barite, calcite, mullite, gallena, manganese oxides, iron oxides, mixtures of these and the like. The weight material is typically added in order to obtain a drilling fluid density of less than about 24, preferably less than about 21, and most preferably less than about 2336.6 kg/m³ (19.5 pounds per gallon).

Fluid loss control agents such as modified lignite, polymers, oxidized asphalt and gilsonite may also be added to the invert drilling fluids of this invention. Usually such fluid loss control agents are employed in an amount which is at least about 0.1, preferably at least about 1, more preferably at least about 5 percent by weight to volume of the total fluid.

Advantageously, embodiments of the present disclosure for at least one of the following. The emulsifier of the present disclosure allows for the formation of a stable invert water-in-oil emulsion, that may be formed on before, during, or after downhole operations, depending on the needs of the operator. Further, the emulsifier of the present disclosure allows for the formation of a stable invert emulsion that renders reduced toxicity upon exposure to high temperature/high pressure conditions.

### EXAMPLES

### Example I

Sample fluids containing the emulsifiers shown in Table I below include an internal olefin C16-18 base oil blended with the specified emulsifier. Montanov WO 18 is an isostearyl alcohol/isostearyl glycoside blend commercially available from Seepic, Inc. GS-28-28 is a polyglycerine oleate commercially available from Champion, and LDP-306 is a nitrogen free emulsifier commercially available from Lamberti. Dispersion tests were run by hot rolling 10 g of Arne Clay cuttings in a one-barrel equivalent of mud for 16 hours at 65.6°C (150°F). After hot rolling, the remaining cuttings are screened using a 20 mesh screen and washed with 10% potassium chloride waster, dried and weighed to obtain the percentage recovered. The results of this evaluation are given in Table 1. Table 1 shows that the nitrogen-containing amido-amine emulsifier dispersed the shale, while the nitrogen-free emulsifiers did not disperse the shale.

**Table 1. Hot Roll Dispersion**

| **Emulsifier** | **Blank** | **Amido-amine** | **Montanov 18** | **GS**-**28**-**28** | **LDP**-**306** |
|---|---|---|---|---|---|
| Period Aged (Hours) | 16 | 16 | 16 | 16 | 16 |
| Temperature °C (°F) | 65.6 (150) | 65.6 (150) | 65.6 (150) | 65.6 (150) | 65.6 (150) |
| Nat. Moisture Correction Factor (g) | 0.05 | 0.05 | 0.05 | 0.05 | 0.05 |
| Initial Weight (g) | 10 | 10 | 10 | 10 | 10 |
| Final Weight (g) | 10.8 | 2.26 | 8.83 | 10.9 | 9.07 |
| Recover % | 114 | 24 | 93 | 115 | 95 |

Percent ammonia content was conducted on the fluids of Table 1, with ammonia content recorded at 16 hours and 48 hours of hot rolling at 176.7°C (350°F). Table 2 details the results of the percent ammonia, indicating that no ammonia was detected for the blank, Montanov WO 18, GS-28-28, and LDP-306 samples. However, amidoamines nitrogen containing emulsifier released ammonia of ammonical products.

**Table 2. Percent Ammonia Content**

| **Emulsifier** | **NH₃ content in headspace (16 hours hot rolling)** | **NH₃ content in headspace (48 hours hot rolling)** |
|---|---|---|
| Blank | ND | ND |
| GS-28-28 | ND | ND |
| LDP-306 | ND | ND |
| Montanov WO 18 | ND | ND |
| Amido-amine | Amine compounds detected | Amine compounds detected |

### Example 2

A sample fluid containing the components shown in Table 3 below include an internal olefin C16-18 base oil and calcium chloride brine blended to create an invert emulsion fluid in accordance with the present invention. VG-PLUS™ is an organophillic clay lubricant for oil-base systems; VERSAWET® is a wetting agent for oil-base systems; ECOTROL® is a filtration control additive for oil-base systems, RHETHIK® is a viscosifier and theology modifier, all of which are available from M-I LLC (Houston, Texas). Montanov WO 18 is a blend of isostearyl alcohol and isostearyl glycoside, and is available from Seepic, Inc. Silwet L-7622 is a defoamer, available from GE Silicones.

**Table 3. Base Formulation**

| | |
|---|---|
| **Base Oil (IO 1618)** | **150.9g** |
| **VG-PLUS** | **6g** |
| **Magnesium Oxide** | **8g** |
| **VERSAWET®** | **6mls** |
| **Montanov WO 18** | **10mls** |
| **Silwet L-7622** | **2mls** |
| **Calcium Chloride** | **22.6g** |
| **Water** | **63.3g** |
| **ECOTROL®** | **3g** |
| **RHETHIK®** | **1ml** |
| **Barite** | **212g** |
| **Rev Dust** | **20g** |

Using this base formulation, Table 4 details the varying oil/water ratios and weights of fluids, and Table 5 details the fluid rheologies.

**Table 4. Mud System Formulations for Oil/Water Radio Testing**

| | 1677.6 kg/m³ 14ppg | | | 1917.2 kg/m³ 16ppg | | | 2156.9 kg/m³ 18ppg | | |
|---|---|---|---|---|---|---|---|---|---|
| | **80:20** | **85:15** | **90:10** | **80:20** | **85:15** | **90:10** | **80:20** | **85:15** | **90:10** |
| **IO 1618** | **145.03** | **153.64** | **162.19** | **129.52** | **137.21** | **144.85** | **115.26** | **122.1** | **128.9** |
| **VG Plus** | **6** | **6** | **6** | **6** | **6** | **6** | **6** | **6** | **6** |
| **MagOx** | **8** | **8** | **8** | **8** | **8** | **8** | **8** | **8** | **8** |
| **Versawet** | **6** | **6** | **6** | **6** | **6** | **6** | **6** | **6** | **6** |
| **Emulsifying Agent** | **10** | **10** | **10** | **10** | **10** | **10** | **10** | **10** | **10** |
| **Silwet L-7622** | **2** | **2** | **2** | **2** | **2** | **2** | **2** | **2** | **2** |
| **CaCl2, 25%** | **16.3** | **12.2** | **8.1** | **14.6** | **10.9** | **7.2** | **13.0** | **9.7** | **6.4** |
| **Water** | **45.7** | **34.2** | **22.7** | **40.8** | **30.5** | **20.3** | **36.3** | **27.1** | **18.0** |
| **Ecotrol** | **3** | **3** | **3** | **3** | **3** | **3** | **3** | **3** | **3** |
| **Rethik** | **-** | **-** | **-** | **-** | **-** | **-** | **-** | **-** | **-** |
| **Barite** | **325** | **332** | **339** | **431.1** | **437.4** | **443.6** | **538.5** | **544.1** | **549.6** |
| **Rev Dust** | **20** | **20** | **20** | **20** | **20** | **20** | **20** | **20** | **20** |

**Table 5. Rheology for Oil/Water Ratio systems**

| 176.6°C(350°F)/16hrs | 1677.6 kg/m³ 14ppg | | | 1917.2 kg/m³ 16ppg | | | 2156.9 kg/m³ 18ppg | | |
|---|---|---|---|---|---|---|---|---|---|
| | **80:20** | **85:15** | **90:10** | **80:20** | **85:15** | **90:10** | **80:20** | **85:15** | **90:10** |
| **600rpm** | **93** | **82** | **64** | **140** | **117** | **89** | **209** | **147** | **160** |
| **300rpm** | **53** | **45** | **33** | **89** | **67** | **50** | **131** | **84** | **88** |
| **200rpm** | **41** | **35** | **25** | **70** | **50** | **38** | **100** | **63** | **64** |
| **100rpm** | **28** | **23** | **17** | **49** | **24** | **24** | **66** | **41** | **39** |
| **6rpm** | **10** | **8** | **5** | **18** | **12** | **11** | **20** | **11** | **10** |
| **3rpm** | **9** | **7** | **5** | **6** | **10** | **7** | **12** | **9** | **8** |
| **10"** | **9** | **8** | **6** | **17** | **11** | **8** | **17** | **11** | **10** |
| **10'** | **12** | **1** | **8** | **24** | **14** | **12** | **25** | **16** | **17** |
| **PV** | **40** | **37** | **31** | **51** | **50** | **39** | **78** | **63** | **72** |
| **YP** | **13** | **8** | **2** | **38** | **17** | **11** | **53** | **21** | **16** |
| HTHP, 176.6°C (350°F) | **11** | **11** | **10** | **7** | **10** | **9** | **7** | **10** | **16** |
| **ES** | **750** | **730** | **845** | **940** | **710** | **1170** | **730** | **680** | **830** |

Various alkalinity agents are added to the invert emulsion fluid described in Table 3, and the Lethal Concentration (LC) value is determined to further demonstrate the toxicity performance of the invert emulsion fluid. Table 6 sets forth the resulting LC values. The LC value is the concentration of a chemical in water. Generally, the LC is expressed as LC50, which is the concentration of the chemical in water that results in killing 50% of the test subjects in the water. In some embodiments, when combining the emulsifying agent of the present invention with an alkalinity agent, the LC50 (suspended particulate phase (SPP)) value at 176.6°C (350°F) is greater than 100,000 parts per million; in other embodiments, the LC50 (SPP) value is greater than 300,000 parts per million; in yet other embodiments, the LC50 value is greater than 500,000 parts per million. The alkalinity agent may be magnesium oxide, calcium hydroxide, or combinations thereof.

**Table 6. Results from Environmental Testing -- LC50**

| ***Emulsifier*** | ***Alkalinity agent*** | **Temp** °C(°F) | ***Time (hrs)*** | ***LC50 Results* (*ppm SPP)*** |
|---|---|---|---|---|
| Montanov WO 18 | Magnesium Oxide | 65.6 (150) | 16 | > 500,000 |
| Montanov WO 18 | Magnesium Oxide | 176.6 (350) | 16 | > 500,000 |
| Montanov WO 18 | Magnesium Oxide | 176.6 (350) | 64 | > 500,000 |
| | | | | |
| Montanov WO 18 | Lime | 65.6 (150) | 16 | 249,786 |
| Montanov WO 18 | Lime | 176.6 (350) | 16 | > 500,000 |
| Montanov WO 18 | Lime | 176,6 (350) | 64 | > 500,000 |

The fluids were heat-aged at the temperatures and time intervals indicated in Tables 7, with the resulting rheologies reported.

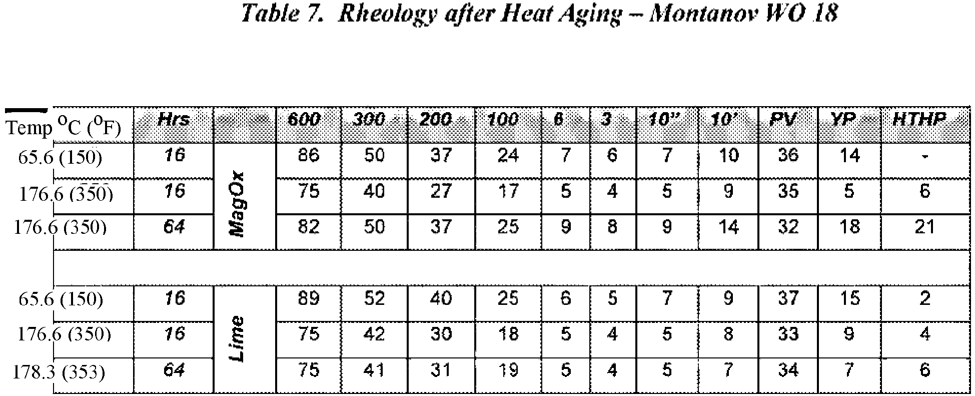

### Example 3

A sample fluid containing the components shown in Table 8 below include an internal olefin C16-18 base oil and calcium chloride brine blended with an emulsifier to create an invert emulsion fluid in accordance with the present invention. VG-PLUS™ is an organophillic clay viscosifying agent for oil-base systems; VERSAWET® is a wetting agent for oil-base systems; ECOTROL® is a filtration control additive for oil-base systems, all of which are available from M-I LLC (Houston, Texas). BioAdd 733 is an alcohol ethoxylate nitrogen free emulsifier available from Shrieve Chemical Products.

**Table 8. Base Formulation**

| | |
|---|---|
| **Base Oil (IO 1618)** | **150.9g** |
| **VG-PLUS** | **6g** |
| **Magnesium Oxide** | **8g** |
| **VERSAWET®** | **6mls** |
| **BioAdd 733** | **10mls** |
| **Calcium Chloride** | **22.6g** |
| **Water** | **63.3g** |
| **ECOTROL®** | **3g** |
| **Barite** | **212g** |
| **Rev Dust** | **20g** |

Using this base formulation, Table 9 details the varying oil/water ratios and weights of fluids, and Table 10 details the fluid rheologies.

**Table 9. Mud System Formulations for Oil/Water Ratio Testing**

| | 1677.6 kg/m³ 14ppg | | | 1917.2 kg/m³ 16ppg | | | 2156.9 kg/m³ 18ppg | | |
|---|---|---|---|---|---|---|---|---|---|
| | **80:20** | **85:15** | **90:10** | **80:20** | **85:15** | **90:10** | **80:20** | **85:15** | **90:10** |
| **IO 1618** | **145.03** | **153.64** | **162.19** | **129.52** | **137.21** | **144.85** | **115.26** | **122.1** | **128.9** |
| **VG Plus** | **6** | **6** | **6** | **6** | **6** | **6** | **6** | **6** | **6** |
| **MagOx** | **8** | **8** | **8** | **8** | **8** | **8** | **8** | **8** | **8** |
| **Versawet** | **6** | **6** | **6** | **6** | **6** | **6** | **6** | **6** | **6** |
| **BioAdd 733** | **10** | **10** | **10** | **10** | **10** | **10** | **10** | **10** | **10** |
| **CaCl2, 25%** | **16.3** | **12.2** | **8.1** | **14.6** | **10.9** | **7.2** | **13.0** | **9.7** | **6.4** |
| **Water** | **45.7** | **34.2** | **22.7** | **40.8** | **30.5** | **20.3** | **36.3** | **27.1** | **18.0** |
| **Ecotrol** | **3** | **3** | **3** | **3** | **3** | **3** | **3** | **3** | **3** |
| **Barite** | **325** | **332** | **339** | **431.1** | **437.4** | **443.6** | **538.5** | **544.1** | **549.5** |
| **Rev Dust** | **20** | **20** | **20** | **20** | **20** | **20** | **20** | **20** | **20** |

**Table 10. Rheology for Oil/Water Ratio systems**

| 176.6°C (350°F)/16hrs | 1677.6 kg/m³ 14ppg | | | 1917.2 kg/m³ 16ppg | | | 2156.9 kg/m³ 18ppg | | |
|---|---|---|---|---|---|---|---|---|---|
| | 80:20 | **85:15** | **90:10** | **80:20** | **85:15** | **90:10** | **80:20** | **85:15** | **90:10** |
| **600rpm** | **107** | **75** | **64** | **186** | **138** | **137** | **258** | **190** | **161** |
| **300rpm** | **54** | **39** | **33** | **102** | **76** | **73** | **144** | **107** | **90** |
| **200rpm** | **38** | **28** | **23** | **77** | **57** | **52** | **108** | **83** | **68** |
| **100rpm** | **22** | **17** | **13** | **45** | **34** | **29** | **67** | **51** | **41** |
| **6rpm** | **5** | **3** | **4** | **10** | **7** | **6** | **18** | **12** | **10** |
| **3rpm** | **4** | **2** | **2** | **8** | **6** | **5** | **15** | **10** | **8** |
| **10"** | **10** | **4** | **3** | **9** | **7** | **6** | **17** | **12** | **10** |
| **10'** | **6** | **5** | **4** | **10** | **8** | **7** | **20** | **15** | **14** |
| **PV** | **53** | **36** | **31** | **84** | **62** | **64** | **114** | **83** | **71** |
| **YP** | **1** | **3** | **2** | **18** | **14** | **9** | **30** | **24** | **19** |
| HTHP, 176.6°C (350°F) | **13** | **14** | **14** | **8** | **11** | **13** | **9** | **11** | **13** |
| **ES** | **225** | **243** | **309** | **386** | **330** | **380** | **325** | **350** | **345** |

Various alkalinity agents are added to the invert emulsion fluid described in Table 8, and the Lethal Concentration (LC) value is determined to further demonstrate the toxicity performance of the invert emulsion fluid. Table 11 sets forth the resulting LC values. The LC value is the concentration of a chemical in water. Generally, the LC is expressed as LC50, which is the concentration of the chemical in water that results in killing 50% of the test subjects in the water. In some embodiments, when combining the emulsifying agent of the present invention with an alkalinity agent, the LC50 (suspended particulate phase (SPP)) value at 176.6°C (350°F) is greater than 100,000 parts per million; in other embodiments, the LC30 (SPP) value is greater than 300.000 parts per million; in yet other embodiments, the LC50 value is greater than 500.000 parts per million. The alkalinity agent may be magnesium oxide, calcium hydroxide, or combinations thereof.

**Table 11. Results from Environmental Testing - LC50**

| ***Emulsifier*** | ***Alkalinity agent*** | ***Temp*** °C(°F) | ***Time (hrs)*** | ***LC50 Results (ppm SPP)*** |
|---|---|---|---|---|
| BioAdd 733 | Magnesium Oxide | 65.6 (150) | 16 | > 500,000 |
| BioAdd 733 | Magnesium Oxide | 176.6 (350) | 16 | > 500,000 |
| BioAdd 733 | Magnesium Oxide | 176.6 (350) | 64 | > 276,334 |
| | | | | |
| BioAdd 733 | Lime | 65.6 (150) | 16 | 452,862 |
| BioAdd 733 | Lime | 176.6 (350) | 16 | > 500,000 |
| BioAdd 733 | Lime | 176.6 (350) | 64 | 277,934 |

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method of performing a downhole operation comprising: circulating an invert emulsion wellbore fluid into a wellbore, wherein the invert emulsion wellbore fluid comprises an oleaginous continuous phase, an aqueous discontinuous phase, and an emulsifying agent consisting of a nitrogen-free emulsifying agent, and wherein the nitrogen-free emulsifying agent consists of a blend of an aliphatic alcohol and a glycoside having a ratio of aliphatic alcohol to glycoside selected from 0.1:10, 1:1, and 10:0.1.

2. The method of claim 1, wherein the aliphatic alcohol is a fatty alcohol; or wherein the aliphatic alcohol is a primary alcohol of the following general formula: 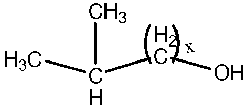 wherein x is an integer between 1 and 20.

3. The method of claim 2, wherein the aliphatic alcohol is a primary alcohol which is isostearyl alcohol.

4. The method of claim 1, wherein the glycoside is isostearyl glycoside.

5. The method of claim 1, wherein the wellbore fluid further comprises an alkalinity agent.

6. The method of claim 5, wherein the alkalinity agent is selected from the group consisting of magnesium oxide and calcium hydroxide.

7. An invert emulsion wellbore fluid comprising:
an oleaginous continuous phase;
an aqueous discontinuous phase; and
an emulsifier consisting of a nitrogen-free emulsifier, wherein the nitrogen-free emulsifier is a blend of isostearyl alcohol and isostearyl glycoside having a ratio of aliphatic alcohol to glycoside selected from 0.1:10, 1:1, and 10:0.1.

8. The invert emulsion wellbore fluid of claim 7 further comprising an alkalinity agent.

9. The invert emulsion wellbore fluid of claim 8, wherein the alkalinity agent is selected from the group consisting of magnesium oxide and calcium hydroxide.

10. The invert emulsion wellbore fluid of claim 7 further comprising a viscosifying agent; or further comprising a weighting agent.

## Patentansprüche

1. Verfahren zur Durchführung einer Untertageoperation, das Folgendes umfasst: das Umlaufenlassen eines Umkehremulsionsbohrlochfluids in ein Bohrloch, worin das Umkehremulsionsbohrlochfluid eine ölige kontinuierliche Phase, eine wässrige disperse Phase und einen Emulgator umfasst, der aus einem stickstofffreien Emulgator besteht, und worin der stickstofffreie Emulgator aus einer Mischung aus einem aliphatischen Alkohol und einem Glykosid besteht, wobei das Verhältnis zwischen dem aliphatischen Alkohol und dem Glykosid aus 0,1:10, 1:1 und 10:0,1 ausgewählt ist.

2. Verfahren nach Anspruch 1, worin der aliphatische Alkohol ein Fettalkohol ist; oder worin der aliphatische Alkohol ein primärer Alkohol der folgenden allgemeinen Formel ist: 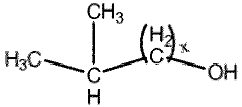 worin x eine ganze Zahl zwischen 1 und 20 ist.

3. Verfahren nach Anspruch 2, worin der aliphatische Alkohol ein primärer Alkohol ist, der Isostearylalkohol ist.

4. Verfahren nach Anspruch 1, worin das Glykosid Isostearylglykosid ist.

5. Verfahren nach Anspruch 1, worin das Bohrlochfluid des Weiteren ein Alkalinitätsmittel umfasst.

6. Verfahren nach Anspruch 5, worin das Alkalinitätsmittel aus der aus Magnesiumoxid und Calciumhydroxid bestehenden Gruppe ausgewählt ist.

7. Umkehremulsionsbohrlochfluid, das Folgendes umfasst:
eine ölige kontinuierliche Phase;
eine wässrige disperse Phase; und
einen Emulgator, der aus einem stickstofffreien Emulgator besteht, worin der stickstofffreie Emulgator eine Mischung aus einem Isostearylalkohol und einem Isostearylglykosid ist, wobei das Verhältnis zwischen dem aliphatischen Alkohol und dem Glykosid aus 0,1:10, 1:1 und 10:0,1 ausgewählt ist.

8. Umkehremulsionsbohrlochfluid nach Anspruch 7, das des Weiteren ein Alkalinitätsmittel umfasst.

9. Umkehremulsionsbohrlochfluid nach Anspruch 8, worin das Alkalinitätsmittel aus der aus Magnesiumoxid und Calciumhydroxid bestehenden Gruppe ausgewählt ist.

10. Umkehremulsionsbohrlochfluid nach Anspruch 7, das des Weiteren ein Viskositätsverstärkungsmittel umfasst; oder des Weiteren ein Beschwerungsmittel umfasst.

## Revendications

1. Procédé de mise en oeuvre d'une opération de forage, comprenant l'étape consistant à : faire circuler une boue de forage en émulsion inverse dans un puits de forage, dans lequel la boue de forage en émulsion inverse comprend une phase oléagineuse continue, une phase aqueuse discontinue, et un agent émulsifiant constitué d'un agent émulsifiant sans azote, et dans lequel l'agent émulsifiant sans azote est constitué d'un mélange d'un alcool aliphatique et d'un glycoside ayant un rapport alcool aliphatique sur glycoside choisi parmi : 0,1:10, 1:1 et 10:0,1.

2. Procédé selon la revendication 1, dans lequel l'alcool aliphatique est un alcool gras ; ou dans lequel l'alcool aliphatique est un alcool primaire de la formule générale suivante : 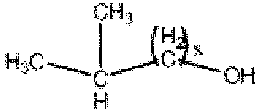 où x est un nombre entier compris entre 1 et 20.

3. Procédé selon la revendication 2, dans lequel l'alcool aliphatique est un alcool primaire, qui est l'alcool isostéarylique.

4. Procédé selon la revendication 1, dans lequel le glycoside est un isostéarylglycoside.

5. Procédé selon la revendication 1, dans lequel la boue de forage comprend en outre un agent d'alcalinité.

6. Procédé selon la revendication 5, dans lequel l'agent d'alcalinité est choisi dans le groupe constitué par l'oxyde de magnésium et l'hydroxyde de calcium.

7. Boue de forage en émulsion inverse, comprenant :
une phase oléagineuse continue ;
une phase aqueuse discontinue ; et
un émulsifiant constitué d'un émulsifiant sans azote, dans laquelle l'émulsifiant sans azote est un mélange d'alcool isostéarylique et d'isostéarylglycoside ayant un rapport alcool aliphatique sur glycoside choisi parmi : 0,1:10, 1:1 et 10:0,1.

8. Boue de forage en émulsion inverse selon la revendication 7, comprenant en outre un agent d'alcalinité.

9. Boue de forage en émulsion inverse selon la revendication 8, dans lequel l'agent d'alcalinité est choisi dans le groupe constitué par l'oxyde de magnésium et de l'hydroxyde de calcium.

10. Boue de forage en émulsion inverse selon la revendication 7, comprenant en outre un agent viscosifiant ; ou comprenant en outre un agent chargeant.
